# EUROPEAN PATENT SPECIFICATION

(11) **EP 2 966 636 B1**
(45) Date of publication and mention of the grant of the patent: **29.03.2017**
(21) Application number: 13878833.6
(22) Date of filing: 18.12.2013
(51) Int. Cl.: G09B 25/00, A63H 3/06, A47F 8/00, A63B 69/34, G01M 17/007

(54) **INFLATABLE MODEL**
AUFBLASBARES MODELL
MODÈLE GONFLABLE

(30) Priority: 21.03.2013 JP 2013058443
(43) Date of publication of application: 13.01.2016
(73) Proprietor: Mind Create Japan, Inc., Shinjuku-ku, Tokyo 160-0023 (JP)
(72) Inventor: KUSAFUKA Hitoshi, Saitama-shi Saitama 336-0034 (JP)
(74) Representative: TBK
(86) International application number: PCT/JP2013/083882
(87) International publication number: WO 2014/147913

(56) References cited:
- WO-A1-2012/156484
- DE-U1- 20 106 708
- GB-A- 334 352
- JP-A- H07 155 478
- JP-A- H10 177 361
- JP-A- 2000 132 130
- JP-A- 2005 258 444
- JP-A- 2005 258 444
- JP-A- 2009 112 376
- JP-U- S5 776 693
- JP-U- S6 020 759
- JP-Y1- S3 810 642
- US-A- 1 287 176
- US-A- 4 765 079

## Description

### Technical Field

The present invention relates to an inflatable model used for collision avoidance performance tests of vehicles.

### Background Art

An automatic braking apparatus which is mounted on a vehicle in order to avoid collision with an object on traveling roads has been known (for example, JP 2007-062604 A).

WO 2012 059203 A discloses an obstacle mounted device used for collision avoidance performance tests of vehicles, comprising a mannequin mounted on a movable carrier. The mannequin comprises an articulated hard skeleton covered with inflatable elements simulating parts of a human body.

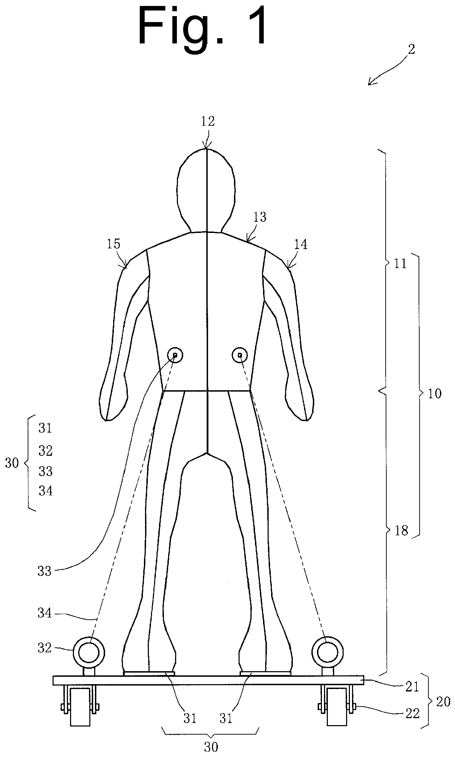

GB 334 352 A discloses inflatable rubber bodies such as toys which are provided with means for receiving stiffening or supporting elements to be inserted after manufacture, such means being air-tightly separated from the interior of the body. As shown in Fig. 1 in the case of a toy policeman, a rubber tube traversing the interior of the body but not communicating with it, serves for the reception of a wire which may then be bent to position the arms as desired. In the case of the feet, the edge seams may be partly unwelded to leave a tubular space in which a wire may be inserted, the wire being then bent to dispose and retain the feet for supporting the figure. In another construction the edge seam may be turned up and again welded as shown in Fig. 15 in order to accommodate the guide tube. In a further variant the seam may be slit as in Fig. 14 to enable the stiffener to be held in place.

US 1 287 176 A discloses an exercising device including an inflated body portion.

DE 201 06 708 U1 discloses an inflatable sculpture which is made of semitransparent material such that an illumination can be provided inside.

JP 2005 258444 A discloses a system which comprises a bag-like body 110 which forms a prescribed shape in an expanded state that gas is fed therein and is foldable in a shrinkage state that the gas is exhausted from the inside, an air feeder which is mounted on the lower part of the bag-like body and can feed the gas into the bag-like body and a supporting storage container which can store the gas feeder and the bag-like body in the shrinkage state therein and can support the lower circumference of the bag-like body against the expansion force thereof. When in use, the gas feeder functions as the weight without specific configuration and the shape is maintained by the supporting storage container.

### Summary of Invention

### Technical Problem

To examine the performance of such an automatic braking apparatus, an obstacle (for example, mannequin) is placed in front of a traveling vehicle on which the automatic braking apparatus is mounted, thereby repeatedly conducting a collision avoidance performance test to examine the collision avoidance capability of the automatic braking apparatus.

However, since a conventional mannequin is made of a hard material, the vehicle and the mannequin are damaged in the collision avoidance performance test when an event in which the vehicle collides with the mannequin (collision event) has occurred. Furthermore, to conduct future collision avoidance performance tests, the vehicle and the mannequin have to be each repaired, or a number of substitutes need to be prepared. As can be seen from this discussion, the collision avoidance performance test has required a lot of work and time.

In view of the circumstances discussed above, an object of the present invention is to provide an inflatable model for facilitating the collision avoidance performance test. Solution to Problem

By intensive studies made by the inventor, the aforementioned object is achieved by the features according to claim 1.

The present invention provides an inflatable model which includes a hermetic bag formed by bonding a plurality of sheets together and which allows a gas to be injected into the bag and expanded, thereby taking a shape resembling a human body. The inflatable model includes an upright posture retainer for maintaining an upright posture of the bag, and the upright posture retainer has an engagement portion which is provided to the bag and with which a lock member can engage.

It is preferable to include a partition member that allows a lower body bag part resembling a lower body to be a hermetic space independent of other portions. Furthermore, the engagement portion is preferably located above the partition member.

A biasing force acting on the engagement portion to be directed to the upright posture retainer may be preferably adjusted, thereby allowing the posture of a portion of the bag below the engagement portion to be switchable between a first state and a second state. Furthermore, the bag is preferably provided with a recess that is recessed inwardly, and the recess may be preferably located between the engagement portion and the lower end of the bag. Furthermore, the recess may be preferably formed at a knee portion, a crotch portion, or an ankle portion.

The bag may be preferably provided with a branch portion, and the branch portion may be preferably provided with a recess that is recessed upwardly. Furthermore, the branch portion may be preferably located at a hip joint portion.

The bag may preferably have a first bag part, a second bag part, and a detachably attaching mechanism for detachably attaching the second bag part to the first bag part. Furthermore, the detachably attaching mechanism may preferably have a first surface fastener provided to the first bag part and a second surface fastener provided to the second bag part.

It may be preferable to further include a mounting member on which a mounting portion of the bag is formed. The upright posture retainer may preferably have a mounting-side engagement member which is provided to the mounting member and which can engage with the lock member.

### Advantageous Effects of Invention

According to the present invention, it is possible to facilitate the collision avoidance performance test.

### Brief Description of Drawings

Fig. 1 is a front view schematically illustrating an obstacle mounted device.
Fig. 2 is a side view schematically illustrating the obstacle mounted device.
Fig. 3 is a rear view schematically illustrating the obstacle mounted device.
Fig. 4 is a partial cross-sectional view schematically illustrating a first inflatable mannequin.
Fig. 5 is an exploded view schematically illustrating the first inflatable mannequin.
Fig. 6 is a side view schematically illustrating the torso part of the first inflatable mannequin.
Fig. 7 is a front view schematically illustrating the first inflatable mannequin.
Fig. 8 shows side views schematically illustrating an inflatable mannequin of a posture with the knee joints stretched in (A) and of a posture with knee joints bent in (B).
Fig. 9 shows (A) an exploded view schematically illustrating a second inflatable mannequin, and (B) a front view schematically illustrating the second inflatable mannequin.
Fig. 10 is a front view schematically illustrating a third inflatable mannequin.
Fig. 11A is a side view schematically illustrating a fourth inflatable mannequin in a closed state.
Fig. 11B is a side view schematically illustrating the fourth inflatable mannequin in an open state.
Fig. 12 is a side view schematically illustrating a fifth inflatable mannequin.

### Description of Embodiments

A description will next be made to embodiments of the present invention with reference to the attached drawings.

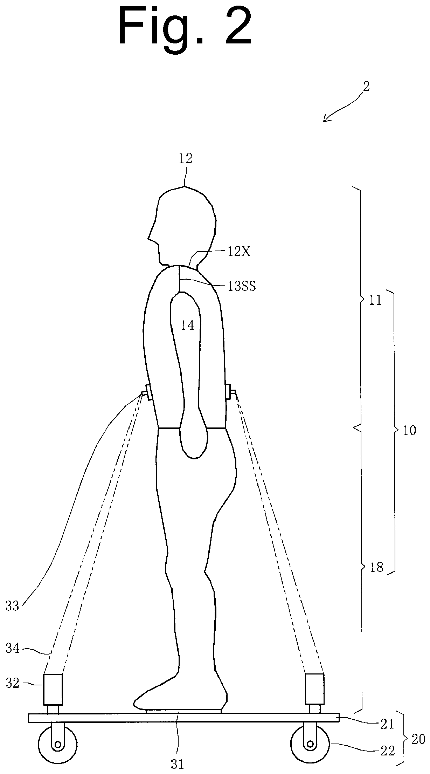

As shown in Figs. 1 to 3, an obstacle mounted device 2 is used for collision avoidance performance tests and includes: a carrier 20 on which an obstacle, i.e., an inflatable mannequin 10 is mounted; and an upright posture retainer 30 which is placed on the carrier 20 and maintains the upright posture of the inflatable mannequin 10. Thus, the inflatable mannequin 10 and the upright posture retainer 30 constitute an inflatable model.

The carrier 20 has a mounting plate 21 on which the inflatable mannequin 10 is mounted, and driving wheels 22 attached to the lower surface of the mounting plate 21.

The upright posture retainer 30, which has bottom plates 31 attached to the bottom of the inflatable mannequin 10, allows the bottom surface of the bottom plates 31 to maintain the upright posture of the inflatable mannequin 10 on the carrier 20.

Furthermore, the upright posture retainer 30 includes: carrier-side annular locks 32 provided to the carrier 20; obstacle-side annular locks 33 provided to the inflatable mannequin 10; and cords 34 for connecting between the carrier-side annular locks 32 and the obstacle-side annular locks 33. The inflatable mannequin 10 and the carrier 20 can be engaged with each other by connecting between the carrier-side annular locks 32 and the obstacle-side annular locks 33 with the cords 34. In this manner, the carrier-side annular locks 32, the obstacle-side annular locks 33, and the cords 34 integrally maintain the upright posture of the inflatable mannequin 10 on the carrier 20.

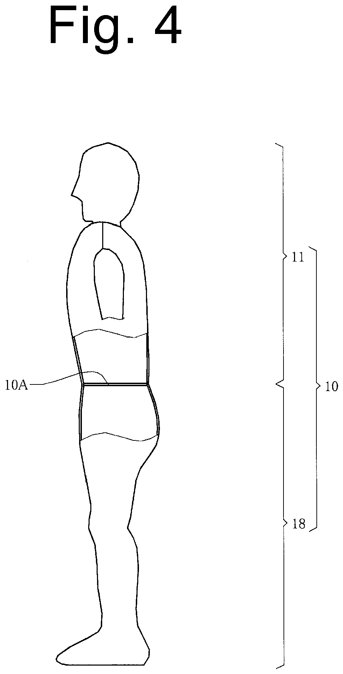

As shown in Fig. 4, the inflatable mannequin 10, which is formed in the shape of a sealed bag by bonding a plurality of sheets together, includes a partition plate 10A for dividing the inner space of the mannequin into two. The partition plate 10A extends from the front to the back inside the inflatable mannequin 10. The partition plate 10A divides the inflatable mannequin 10 into an upper body part 11 above the partition plate 10A and a lower body part 18 below the partition plate 10A.

The sheets and the partition plate 10A that constitute the inflatable mannequin 10 are made of elastic materials. The elastic materials may include, for example, plastics, which may include vinyl, i.e., polyvinyl chloride (PVC), and polypropylene. These sheets and the partition plate 10A are formed in the shape of a sealed bag by bonding using highfrequency bonding means.

Those test vehicles that are used for the collision avoidance performance test incorporate not only an automatic braking apparatus but also an obstacle sensor (for example, millimeter-wave radar) for sensing obstacles. Thus, the sheets and the partition plate 10A that constitute the inflatable mannequin 10 preferably do not contain metal. That is, the sheets and the partition plate 10A that constitute the inflatable mannequin 10 may preferably be formed only of plastics. This prevents the radar outputted from the obstacle sensor from being absorbed by the inflatable mannequin 10. It is thus possible in the collision avoidance performance test to reduce errors caused by the absorption of radar.

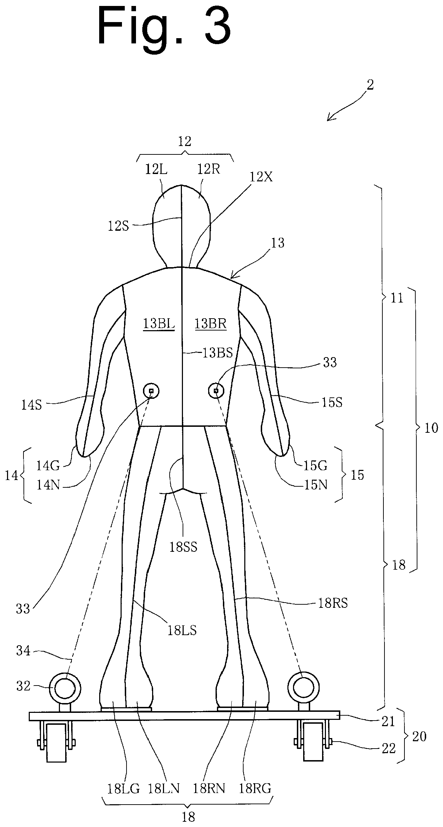

As shown in Fig. 3, the upper body part 11 has a head part 12 resembling the shape of a head, a torso part 13 resembling the shape of a torso, a left arm part 14 resembling the shape of a left arm, a right arm part 15 resembling the shape of a right arm, and a coupling mechanism 16 for coupling the left arm part 14, the right arm part 15, and the torso part 13.

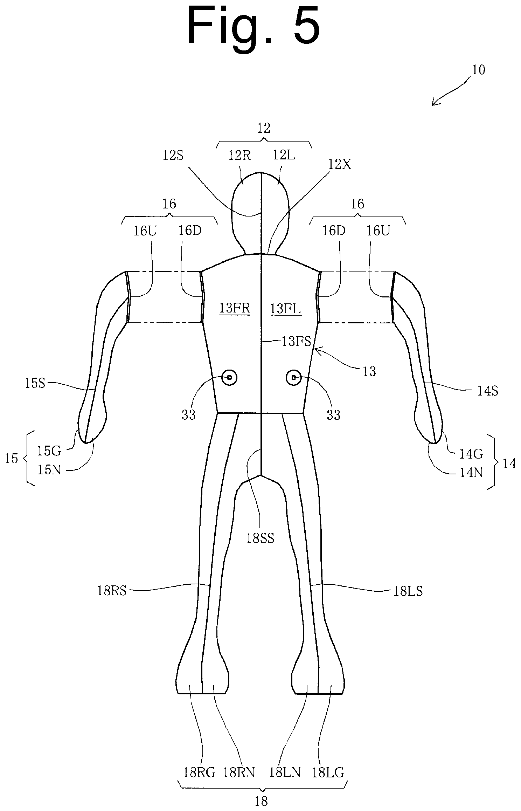

As shown in Figs. 3 and 5, the head part 12 includes a left head sheet 12L which forms the left of the head and a right head sheet 12R which forms the right of the head. The left head sheet 12L and the right head sheet 12R are bonded together along a head bonding line 12S which extends from the front of the head to the rear of the head via the top.

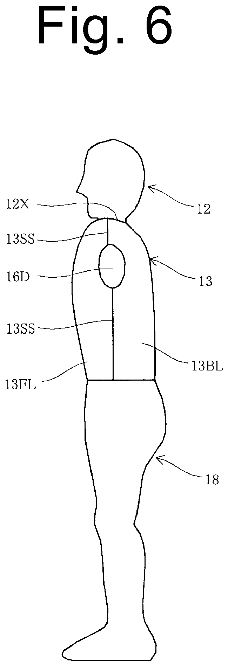

The torso part 13 has a front left torso sheet 13FL which forms the front left of the torso, a front right torso sheet 13FR which forms the front right of the torso, a back left torso sheet 13BL which forms the left back of the torso, and a back right torso sheet 13BR which forms the right back of the torso. The front left torso sheet 13FL and the front right torso sheet 13FR are bonded together along a front torso bonding line 13FS that extends in the vertical direction on the front of the torso. The back left torso sheet 13BL and the back right torso sheet 13BR are bonded together along a back torso bonding line 13BS that extends in the vertical direction on the back of the torso. Likewise, the front left torso sheet 13FL and the back left torso sheet 13BL as well as the front right torso sheet 13FR and the back right torso sheet 13BR are bonded together along a side bonding line 13SS (see Fig. 6) that extends in the vertical direction on the sides of the torso. Furthermore, the head part 12 is directly bonded to the torso part 13 along a head torso bonding line 12X. In this manner, the head part 12 and the torso part 13 constitute one sealed bag.

As shown in Figs. 3 and 5, the left arm part 14 has a left arm inner sheet 14N which forms the inside of the left arm, and a left arm outer sheet 14G which forms the outside of the left arm. The left arm inner sheet 14N and the left arm outer sheet 14G are bonded together along a left arm part bonding line 14S that extends from the front of the left arm to the back via the tip of the hand. Likewise, the right arm part 15 has a right arm inner sheet 15N which forms the inside of the right arm, and a right arm outer sheet 15G which forms the outside of the right arm. Furthermore, the right arm inner sheet 15N and the right arm outer sheet 15G are bonded together along a right arm part bonding line 15S that extends from the front to the back of the right arm via the tip of the hand. In this manner, the left arm part 14 is formed into one sealed bag by the respective sheets 14N and 14G, and the right arm part 15 is formed into one sealed bag by the respective sheets 15N and 15G.

As shown in Figs. 5 and 6, the coupling mechanism 16 has a torso-side coupler 16D provided to the shoulder part of the torso part 13, and an arm-side coupler 16U provided to the base portion of the left arm part 14 and the right arm part 15. The torso-side coupler 16D and the arm-side coupler 16U, which are, for example, what is called a surface fastener, can be detachably coupled together.

As shown in Figs. 3 and 5, the lower body part 18, which is integrally formed from the waist to the toe of the legs, includes: a left outer lower body sheet 18LG which forms the outside of the left portion; a left inner lower body sheet 18LN which forms the inside of the left portion; a right outer lower body sheet 18RG which forms the outside of the right portion; and a right inner lower body sheet 18RN which forms the inside of the right portion.

The left inner lower body sheet 18LN and the right inner lower body sheet 18RN are bonded together along a crotch bonding line 18SS that extends from front center of the waist to the back center of the waist via the crotch. The left outer lower body sheet 18LG and the left inner lower body sheet 18LN are bonded together along a left leg bonding line 18LS that extends from the front of the waist to the back of the waist via the toe. Likewise, the right outer lower body sheet 18RG and the right inner lower body sheet 18RN are bonded together along a right leg bonding line 18RS that extends from the front of the waist to the back of the waist via the toe. In this manner, the lower body part 18 is one sealed bag that is formed by the respective sheets 18LG, 18LN, 18RG, and 18RN.

Now, a description will be made to two examples as to how to use the obstacle mounted device 2 for the collision avoidance performance test.

In the collision avoidance performance test, the obstacle mounted device 2 is placed in advance on the traveling course of a vehicle, or alternatively, the obstacle mounted device 2 is allowed to enter the traveling course when the vehicle is approaching. Tests are thereby conducted on the operation of the automatic braking apparatus mounted on the vehicle and the presence or absence of a collision event.

The obstacle mounted on the obstacle mounted device 2 is the inflatable mannequin 10. Thus, even in the case of a collision between the vehicle and the obstacle, the vehicle and the obstacle that have collided with each other would not be damaged. Thus, it is possible to avoid the need of repairing or replacing the vehicle and the obstacle, which would have been otherwise required each time a collision occurred therebetween. Furthermore, since the inflatable mannequin 10 above is provided with the obstacle-side annular locks 33, it is possible, for example, to engage the inflatable mannequin 10 and the carrier 20 using the carrier-side annular locks 32 provided to the carrier 20 and the cords 34. Thus, the inflatable mannequin 10 in an upright state can be placed in or allowed to enter the traveling course with no change made thereto.

Furthermore, the inflatable mannequin 10 is divided by the partition plate 10A into the upper body part 11 and the lower body part 18. Thus, even when the upper body part 11 is damaged due to a collision, the hermeticity of the lower body part 18 can be secured. Thus, even when the hermeticity of the upper body cannot be secured, for example, when the upper body part 11 is damaged, the upright posture of the inflatable mannequin 10 can be maintained.

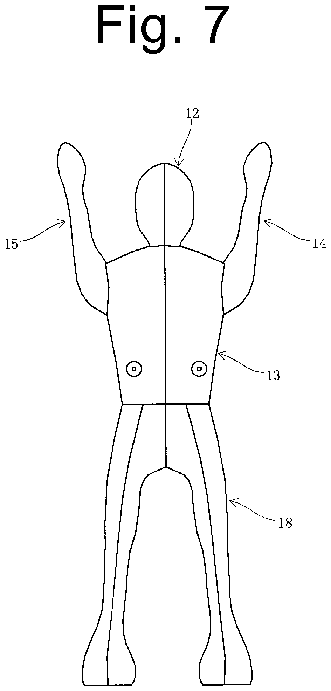

Furthermore, the inflatable mannequin 10 has the coupling mechanism 16, that is, the torso-side coupler 16D and the arm-side coupler 16U. Thus, as shown in Figs. 1 and 7, the left arm part 14 and the right arm part 15 can be attached to the upper body part 11 (in all orientations of 360°). As a result, the inflatable mannequin 10 can take various postures.

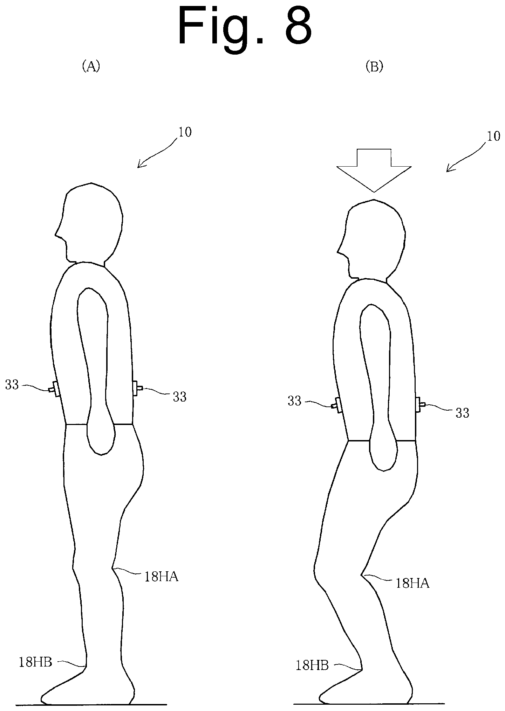

Furthermore, as shown in Fig. 8, of the joint portions of the lower body part 18 (the crotch portion, the knee portions, and the ankle portions), the knee portion is protruded frontward relative to the crotch portion and the ankle portion. That is, the knee portion of the lower body part 18 is provided to the back with a first recess 18HA that is recessed inwardly. Thus, when a force directed from the crotch portion to the ankle portion is applied to the inflatable mannequin 10, the first recess 18HA is bent on a priority basis, with the result that the posture of the lower body part 18 can be adjusted between the posture with the knee portions relatively stretched (see Fig. 8(A)) and the posture with the knee portions bent (see Fig. 8(B)). On the other hand, the inflatable mannequin 10 can also be provided with an engagement mechanism 40 so as to adjust the fastening force of the cords 34 connecting between the carrier-side annular locks 32 and the obstacle-side annular locks 33. This makes it possible to maintain a desired posture of the inflatable mannequin 10. Furthermore, even in this case, since the inflatable mannequin 10 has the upper body part 11 and the lower body part 18 that are divided by the partition plate 10A, it is possible to keep the shape of the upper body part 11 constant even in the presence of a change in the posture of the lower body part 18.

Furthermore, since the obstacle-side annular locks 33 are provided above the partition plate 10A, the fastening force exerted by the cords 34 acts uniformly upon the entire partition plate 10A. Thus, even in the presence of the fastening force imparted by the cords 34, the upright posture can be retained while the strain of the posture of the lower body part 18 is avoided.

Note that the ankle portion of the lower body part 18 may be preferably provided to the front with a second recess 18HB that is recessed inwardly. Then, when a force is applied to the inflatable mannequin 10 so as to push the same upwardly or pull the same downwardly, the first recess 18HA and the second recess 18HB are bent on a priority basis, with the result that the posture of the lower body part 18 can be adjusted between the posture with the knees stretched (see Fig. 8(A)) and the posture with the knees bent (see Fig. 8(B)).

In the embodiment above, of the lower body part 18, the back of the knee portion was provided with the first recess 18HA. However, the present invention is not limited thereto. The first recess 18HA may be provided to a desired portion of the inflatable mannequin 10 so long as the desired portion is located between the obstacle-side annular locks 33 and the lower end of the inflatable mannequin 10. Furthermore, with the obstacle-side annular locks 33 provided to the upper body part 11, the first recess may be formed on the front of the waist part. In this case, the fastening force of the cords 34 can be adjusted, thereby allowing the inflatable mannequin 10 to be adjusted between the frontward bent posture and the upright posture.

Likewise, the second recess 18HB may also be provided at a desired portion opposite to the first recess 18HA so long as the desired portion is located between the obstacle-side annular locks 33 and the lower end of the inflatable mannequin 10. This causes both of the first recess 18HA and the second recess 18HB to be bent on a priority basis, with the result that the inflatable mannequin 10 can take various postures.

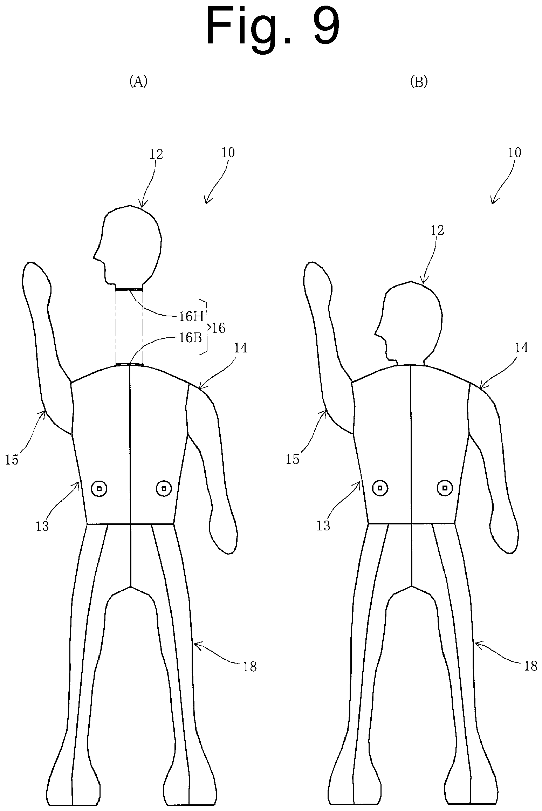

The aforementioned embodiment employs the coupling mechanism 16 which allows the torso part 13 and the left arm part 14 or the torso part 13 and the right arm part 15 to be detachably attached to each other. However, the present invention is not limited thereto. It is also acceptable to employ the coupling mechanism 16 that allows both the head part 12 and the torso part 13, which are each formed as an independent sealed bag, to be detachably attached to each other (see Fig. 9). The coupling mechanism 16 has a torso-side coupler 16B provided to the neck portion of the torso part 13 and a head-side coupler 16H provided to the base portion of the head part 12. The torso-side coupler 16B and the head-side coupler 16H, which are, for example, what is called a surface fastener, can also be detachably attached to each other. The coupling mechanism 16 constructed in this manner allows the head part 12 to be attached to the torso part 13 at various orientations (in all orientations of 360°). Likewise, it is also acceptable to employ a coupling mechanism that allows both the upper body part 11 and the lower body part 18, which are each an independent sealed bag, to be detachably attached to each other. These coupling mechanisms allow various postures of the inflatable mannequin 10 to be implemented.

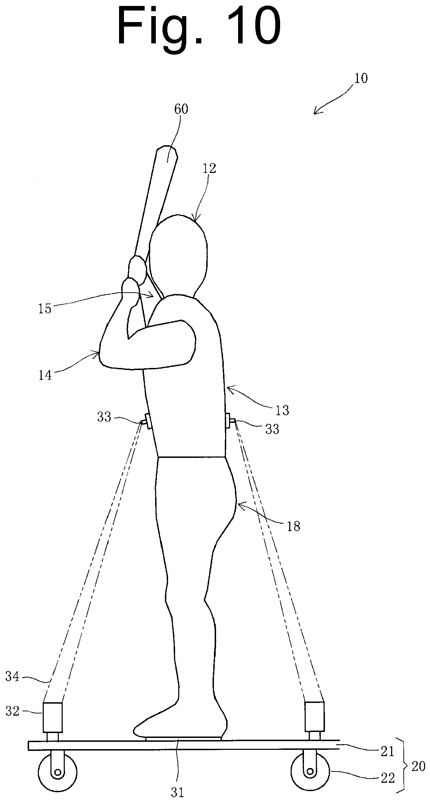

The aforementioned embodiment employs the left arm part 14 having the shape of a stretched left arm and the right arm part 15 having the shape of a stretched right arm. However, the present invention is not limited thereto. For example, it is also acceptable to employ the left arm part 14 and the right arm part 15 which resemble the shape of the left and right arms holding a baseball bat 60 (see Fig. 10). At the time of practicing of baseball pitching, this allows the model to serve as a batter standing in the batter's box. Furthermore, for practicing ball games such as soccer or basketball, the model can also be used as a defender model (see Figs. 7 and 9).

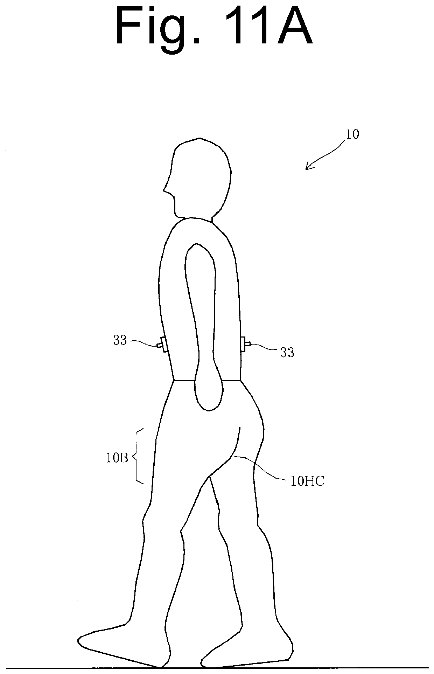

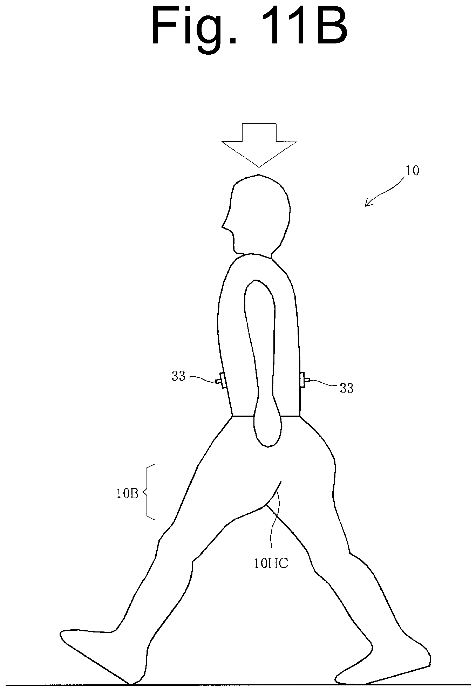

The aforementioned embodiment employs the inflatable mannequin 10 in an upright posture. However, the present invention is not limited thereto. It is also possible to employ the inflatable mannequin 10 in a walking posture (see Figs. 11A to 11B). For the inflatable mannequin 10 in the walking posture, the portion from which both legs extend from the waist portion, that is, the hip joint portion serves as a branch portion 10B. And, the branch portion 10B is provided with an upward recess 10HC formed upwardly. Thus, the magnitude of a force acting upon the inflatable mannequin 10 from the crotch portion to the ankle portion can be adjusted to thereby allow the branch portion 10B to be deformed on a priority basis, with the result that it is possible to switch between an open posture with the hip joint relatively opened (see Fig. 11B) and a closed posture with the hip joint relatively closed (see Fig. 11A).

In the aforementioned embodiment, the obstacle-side annular locks 33 are provided to the upper body part 11. However, the present invention is not limited thereto, and for example, the obstacle-side annular locks 33 may also be provided to the lower body part 18.

Note that if the sole of the inflatable mannequin 10 functions as the upright posture retainer 30, then the bottom plates 31 serving as the upright posture retainer 30 may be omitted.

Note that in the aforementioned embodiment, a description is made to a mannequin resembling the shape of a human as an inflatable model. It is also acceptable, in other embodiments not forming part of the present invention, to employ a model of an object according to use, such as a vehicle, motorbike, baseball fence, or soccer goal.

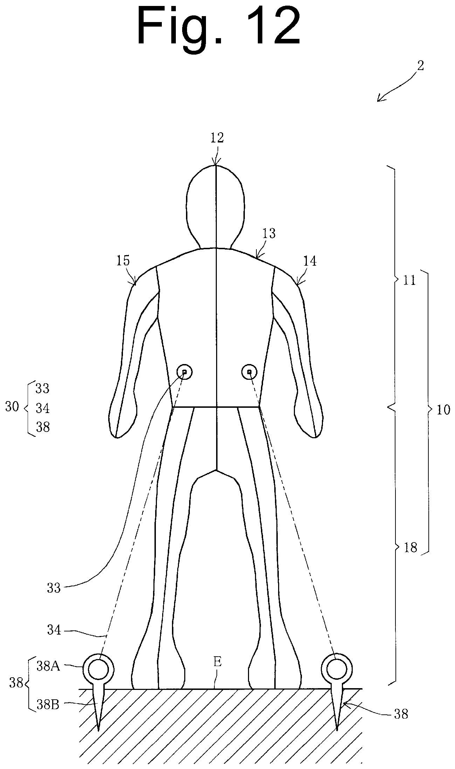

The aforementioned embodiment employs the obstacle mounted device 2 that includes the inflatable mannequin 10, the carrier 20, and the upright posture retainer 30 (see, for example, Fig. 1). In other embodiments not forming part of the present invention, the inflatable mannequin 10 may be used alone, or as shown in Fig. 12, only the inflatable mannequin 10 and the upright posture retainer 30 may also be used. In this case, the upright posture retainer 30 has the obstacle-side annular locks 33 provided to the inflatable mannequin 10, ground-side engagement assemblies 38 which can be erected on the ground E, and the cords 34 connecting between the obstacle-side annular locks 33 and the ground-side engagement assemblies 38. The ground-side engagement assembly 38 has an annular lock 38A with which the cords 34 can engage, and a stake 38B which is consecutively connected to the annular lock 38A and can be hammered into the ground E. This allows the inflatable mannequin 10 to be directly provided on the ground E while a predetermined posture is maintained.

Note that the present invention is not limited to the aforementioned embodiments, but as a matter of course, various changes may be made thereto without departing from the scope of the present invention.

## Claims

1. An obstacle mounted device (2) used for collision avoidance performance tests including:
an inflatable model comprising a hermetic bag formed by bonding a plurality of sheets together and allowing a gas to be injected into the bag and expanded, thereby taking a shape resembling a human body;
a carrier (20) on which the inflatable model is mounted and allowed to enter a traveling course when a vehicle is approaching;
an upright posture retainer (30) which is placed on the carrier (20) for maintaining an upright posture of the bag ; and wherein
the upright posture retainer (30) has an engagement portion which is provided to the bag and a lock member for engaging with the engagement portion.

2. The obstacle mounted device according to claim 1, comprising a partition member (10A) that allows a lower body bag part (18) resembling a lower body to be a hermetic space independent of other portions.

3. The obstacle mounted device according to claim 2, wherein the engagement portion is located above the partition member (10A).

4. The obstacle mounted device according to any one of claims 1 to 3, wherein a biasing force acting on the engagement portion is adjusted, thereby allowing the posture of a portion of the bag below the engagement portion to be switchable between a first state and a second state.

5. The obstacle mounted device according to claim 4, wherein
the bag is provided with a recess (10HA, 18HA, 18HB) that is recessed inwardly, and
the recess (10HA, 18HA, 18HB) is located between the engagement portion and a lower end of the bag.

6. The obstacle mounted device according to claim 5, wherein the recess (10HA, 18HA, 18HB) is formed at a knee portion, a crotch portion, or an ankle portion.

7. The obstacle mounted device according to any one of claims 1 to 6, wherein
the bag is provided with a branch portion (10B), and
the branch portion (10B) is provided with a recess (10HA, 18HA, 18HB) that is recessed upwardly.

8. The obstacle mounted device according to claim 7, wherein the branch portion (10B) is located at a hip joint portion.

9. The obstacle mounted device according to any one of claims 1 to 8, wherein
the bag has
a first bag part (12, 13, 14, 15),
a second bag part (12, 13, 14, 15), and
a detachably attaching mechanism (16) for detachably attaching the second bag part to the first bag part.

10. The obstacle mounted device according to claim 9, wherein
the detachably attaching mechanism (16) has
a first surface fastener (16D) provided to the first bag part and
a second surface fastener (16U) provided to the second bag part.

11. The obstacle mounted device according to any one of claims 1 to 10, further comprising a mounting member on which a mounting portion of the bag is formed, and wherein
the upright posture retainer (30) has a mounting-side engagement member which is provided to the mounting member and which can engage with the lock member.

## Patentansprüche

1. Hindernisbefestigungsvorrichtung (2), die für Kollisionsvermeidungsleistungstests verwendet wird, die Folgendes aufweist:
ein aufblasbares Model, das einen hermetischen Beutel aufweist, der durch ein Verkleben einer Vielzahl von Bahnen miteinander ausgebildet ist, und das einem Gas ermöglicht, in den Beutel eingepresst und expandiert zu werden, wodurch eine Form eingenommen wird, die einem menschlichen Körper ähnelt;
einen Träger (20), auf dem das aufblasbare Modell montiert ist und der in der Lage ist, in einen Fahrweg einzutreten, wenn sich ein Fahrzeug nähert;
einen Aufrechtstellungshalter (30), der auf dem Träger (20) zum Beibehalten einer aufrechten Stellung des Beutels platziert ist; und
wobei der Aufrechtstellungshalter (30) einen Eingriffsabschnitt, der an dem Beutel vorgesehen ist, und ein Sperrbauteil hat, um mit dem Eingriffsabschnitt in Eingriff zu stehen.

2. Hindernisbefestigungsvorrichtung nach Anspruch 1, mit einem Unterteilungsbauteil (10A), das es einem unteren Körperbeutelteil (18), der einem unteren Körper ähnelt, ermöglicht, ein hermetischer Raum zu sein, der unabhängig von anderen Abschnitten ist.

3. Hindernisbefestigungsvorrichtung nach Anspruch 2, wobei sich der Eingriffsabschnitt oberhalb des Unterteilungsbauteils (10A) befindet.

4. Hindernisbefestigungsvorrichtung nach einem der Ansprüche 1 bis 3, wobei eine Vorspannkraft, die auf den Eingriffsabschnitt wirkt, eingestellt wird, wodurch es der Stellung eines Abschnitts des Beutels unterhalb des Eingriffsabschnitts ermöglicht wird, zwischen einem ersten Zustand und einem zweiten Zustand umschaltbar zu sein.

5. Hindernisbefestigungsvorrichtung nach Anspruch 4, wobei
der Beutel mit einer Vertiefung (10HA, 18HA, 18HB) versehen ist, die einwärts vertieft ist, und
die Vertiefung (10HA, 18HA, 18HB) sich zwischen dem Eingriffsabschnitt und einem unteren Ende des Beutels befindet.

6. Hindernisbefestigungsvorrichtung nach Anspruch 4, wobei die Vertiefung (10HA, 18HA, 18HB) an einem Knieabschnitt, einem Schrittabschnitt oder einem Fußgelenkabschnitt ausgebildet ist.

7. Hindernisbefestigungsvorrichtung nach einem der Ansprüche 1 bis 6, wobei
der Beutel mit einem Abzweigabschnitt (10B) versehen ist, und
der Abzweigabschnitt (10B) mit einer Vertiefung (10HA, 18HA, 18HB) versehen ist, die aufwärts vertieft ist.

8. Hindernisbefestigungsvorrichtung nach Anspruch 7, wobei sich der Abzweigabschnitt (10B) an einem Hüftgelenksabschnitt befindet.

9. Hindernisbefestigungsvorrichtung nach einem der Ansprüche 1 bis 8, wobei
der Beutel Folgendes hat
einen ersten Beutelteil (12, 13, 14, 15),
einen zweiten Beutelteil (12, 13, 14, 15), und
einen lösbaren Anbringungsmechanismus (16) zum lösbaren Anbringen eines zweiten Beutelteils an den ersten Beutelteil.

10. Hindernisbefestigungsvorrichtung nach Anspruch 9, wobei
der lösbare Anbringungsmechanismus (16) Folgendes aufweist
eine erste Oberflächenbefestigung (16D), die an dem ersten Beutelteil vorgesehen ist, und
eine zweite Oberflächenbefestigung (16U), die an dem zweiten Beutelteil vorgesehen ist.

11. Hindernisbefestigungsvorrichtung nach einem der Ansprüche 1 bis 10, ferner mit einem Befestigungsbauteil, an dem ein Befestigungsabschnitt des Beutels ausgebildet ist, und wobei
der Aufrechtstellungshalter (30) ein montageseitiges Eingriffsbauteil hat, das an dem Befestigungsbauteil vorgesehen ist und das mit dem Sperrbauteil in Eingriff gelangen kann.

## Revendications

1. Dispositif monté sur un obstacle (2) utilisé pour des tests de prévention de collision comprenant :
un modèle gonflable comprenant un sac hermétique formé en reliant une pluralité de feuilles et en permettant à un gaz d'être injecté dans le sac et expansé, prenant ainsi une forme ressemblant à un corps humain ;
un support (20) sur lequel le modèle gonflable est monté et est autorisé à entrer dans un trajet de déplacement lorsqu'un véhicule s'approche ;
un dispositif de retenue de posture droite (30) qui est placé sur le support (20) pour maintenir une posture droite du sac ; et
dans lequel :
le dispositif de retenue de posture droite (30) a une partie de mise en prise qui est prévue sur le sac et un élément de verrouillage pour se mettre en prise avec la partie de mise en prise.

2. Dispositif monté sur un obstacle selon la revendication 1, comprenant un élément de séparation (10A) qui permet à une partie inférieure de sac en forme corps (18) ressemblant à un bas de corps d'être un espace hermétique indépendant des autres parties.

3. Dispositif monté sur un obstacle selon la revendication 2, dans lequel la partie de mise en prise est positionnée au-dessus de l'élément de séparation (10A).

4. Dispositif monté sur un obstacle selon l'une quelconque des revendications 1 à 3, dans lequel une force de sollicitation agissant sur la partie de mise en prise est ajustée, permettant ainsi à la posture d'une partie du sac au-dessous de la partie de mise en prise de pouvoir être commutée entre un premier état et un second état.

5. Dispositif monté sur un obstacle selon la revendication 4, dans lequel :
le sac est prévu avec un évidement (10HA, 18HA, 18HB) qui est enfoncé vers l'intérieur, et
l'évidement (10HA, 18HA, 18HB) est positionné entre la partie de mise en prise et une extrémité inférieure du sac.

6. Dispositif monté sur un obstacle selon la revendication 5, dans lequel l'évidement (10HA, 18HA, 18HB) est formé comme une partie de genou, une partie d'entrejambes ou une partie de cheville.

7. Dispositif monté sur un obstacle selon l'une quelconque des revendications 1 à 6, dans lequel :
le sac est prévu avec une partie de branche (10B), et
la partie de branche (10B) est prévue avec un évidement (10HA, 18HA, 18HB) qui est enfoncé vers l'intérieur.

8. Dispositif monté sur un obstacle selon la revendication 7, dans lequel la partie de branche (10B) est positionnée au niveau d'une partie d'articulation de hanche.

9. Dispositif monté sur un obstacle selon l'une quelconque des revendications 1 à 8, dans lequel :
le sac a :
une première partie de sac (12, 13, 14, 15),
une seconde partie de sac (12, 13, 14, 15), et
un mécanisme de fixation détachable (16) pour fixer, de manière détachable, la seconde partie de sac à la première partie de sac.

10. Dispositif monté sur un obstacle selon la revendication 9, dans lequel :
le mécanisme de fixation détachable (16) a :
une première fixation de surface (16D) prévue sur la première partie de sac, et
une seconde fixation de surface (16U) prévue sur la seconde partie de sac.

11. Dispositif monté sur un obstacle selon l'une quelconque des revendications 1 à 10, comprenant en outre un élément de montage sur lequel une partie de montage du sac est formée, et dans lequel :
le dispositif de retenue de posture droite (30) a un élément de mise en prise du côté du montage qui est prévu sur l'élément de montage et qui peut se mettre en prise avec l'élément de verrouillage.
